# FASCICULE DE BREVET EUROPEEN

(11) **EP 0 335 766 B1**
(45) Date de publication et mention de la délivrance du brevet: **02.06.1993**
(21) Numéro de dépôt: 89400736.8
(22) Date de dépôt: 16.03.1989
(51) Int. Cl.: H02K 41/06, H02K 5/12

(54) **Moteur pas à pas linéaire débrayable**
Auslösbarer linearer Schrittmotor
Releasable linear step by step motor

(30) Priorité: 21.03.1988 FR 8803779
(43) Date de publication de la demande: 04.10.1989
(73) Titulaire: CROUZET Automatismes, 26000 Valence (FR)
(72) Inventeur: Spiesser, Gilbert, F-30100 Alès (FR)
(74) Mandataire: Bloch, Gérard

(56) Documents cités:
- EP-A- 0 078 740
- DE-B- 1 167 431
- US-A- 2 535 695
- US-A- 2 780 740

## Description

La présente invention concerne les moteurs électriques pas à pas linéaires débrayables du type comprenant un stator multipolaire dans l'alésage duquel tourne de manière cycloidale un rotor de diamètre inférieur.

Pour transformer ce mouvement de rotation en mouvement linéaire axial, l'alésage du stator est taraudé tandis que le rotor comporte sur sa partie périphérique des stries parallèles ou encore un filetage compatible avec le taraudage du stator. Une tige motrice, solidaire axialement du rotor, est entraînée ainsi en translation linéaire.

Les moteurs de ce type sont déjà connus, un exemple en est notamment décrit dans la demande de brevet européen No. 0 078 740.

De tels dispositifs sont utilisés notamment pour la commande de systèmes de régulation. Dans ces systèmes, la tige motrice, qui se déplace linéairement, et pas à pas, commande des organes de régulation. On l'appelle souvent tige de commande.

Une caractéristique de ces dispositifs est que, lorsque l'on ne prend pas de précautions particulières, le moteur baigne dans le milieu gazeux ou liquide à réguler.

Ceci est sans grande importance lorsque ce milieu est de l'air, par exemple, mais il en va tout autrement quand ce milieu comprend des liquides ou des gaz dangereux, notamment déflagrants.

Dans ce cas, le milieu statorique étant un milieu électriquement actif, il y a des risques d'explosion. De plus, il en est général nécessaire que le moteur n'offre pas au liquide ou au gaz dangereux un passage vers le milieu extérieur qui doit rester protégé.

On connaît par ailleurs par les documents US-A 2 535 695 et DE-B-1 167 431 des moteurs électriques dans lesquels le milieu rotorique est isolé du milieu statorique au moyen de joints toriques, mais l'agencement décrit dans ces documents n'est pas adopté à la conformation particulière des moteurs du type précité.

La présente invention vise à pallier cet inconvénient.

A cet effet, elle a pour objet un moteur électrique pas à pas linéaire débrayable comprenant un stator multipolaire dans l'alésage duquel route de manière cycloidale un rotor de diamètre inférieur, et comportant des moyens d'étanchéité disposés entre le milieu rotorique et le milieu statorique pour isoler ledit milieu statorique dudit milieu rotorique, caractérisé par le fait que lesdits moyens d'étanchéité comprennent des moyens élastiques et des moyens rigides pour supporter lesdits moyens élastiques et les comprimer d'une part contre deux surfaces annulaires cylindriques solidaires respectivement des deux extrémités de l'alésage dudit stator et d'autre part contre les tranches de deux fourreaux cylindriques de logement dudit rotor.

Le volume rotorique du moteur de l'invention peut ainsi communiquer librement avec un volume contenant un gaz ou un liquide dangereux, sans qu'il en résulte un risque d'explosion, ou une fuite vers l'extérieur de ce gaz ou de ce liquide.

Comme cela sera mieux compris dans la suite, cet agencement est comptatible avec un stator d'épaisseur réduite dans les intervalles entre pôles, qui améliore les performances du moteur.

Avantageusement, lesdits moyens rigides comprennent des bagues d'appui profilées en forme de L et lesdits moyens élastiques comprennent des joints toriques.

La présente invention sera mieux comprise à la lecture de la description suivante de la forme de réalisation préférée du moteur de l'invention, faite en se référant aux dessins annexés, sur lesquels :
- la figure 1 représente une vue générale en coupe axiale du moteur de l'invention,
- la figure 2 représente une coupe partielle détaillée montrant l'agencement des joints du moteur de la figure 1, et,
- la figure 3 représente une vue de face du stator du moteur de la figure 1.

En référence aux figures, un moteur comprend une carcasse cylindrique 1, fermée d'un côté par un flasque avant 2 et de l'autre côté par un flasque arrière 3. A l'intérieur de la carcasse 1 est ajusté, en position sensiblement médiane, un stator 4, ici à alésage cylindrique et à quatre pôles disposés en forme de croix, dont les branches sont décalées de 90° l'une part rapport à l'autre. Chacune des quatre branches est entourée d'une bobine 5 alimentée en énergie électrique de manière propre à assurer le fonctionnement du moteur.

Le flasque avant 2 comporte un prolongement tubulaire formant fourreau 6 s'étendant vers l'intérieur du moteur suivant une direction perpendiculaire au plan dudit flasque pour coopérer par contact avec la face avant 51 du stator 4 comme il sera expliqué plus loin.

De la même manière, la face arrière 52 du stator 4 coopère avec un fourreau tubulaire tronconique 7 fermé à son extrémité opposée 8. Ce fourreau 7 comprend deux portions 9, 10 de diamètres moyens différents dans le prolongement l'un de l'autre et de hauteur sensiblement équivalentes, la première portion 9 logée à l'intérieur du moteur comporte un diamètre intérieur sensiblement supérieur à celui de l'alésage du stator et une hauteur au moins égale à la course du rotor 11 dans son fonctionnement pour passer d'une position extrême à son autre position extrême. La seconde portion 10 de diamètre moyen inférieur comporte un diamètre intérieur sensiblement supérieur à celui d'une tige motrice 20 solidaire axialement du rotor 11 et sa hauteur est au moins égale à la course maximale du rotor 11. La tige motrice, ou tige de commande 20, est destinée à commander un organe de régulation non représenté, par exemple.

Le flasque arrière 3 du moteur de forme générale circulaire comprend en son centre un alésage sensiblement supérieur au diamètre extérieur de la portion 10 du fourreau 7 et coopère avec ledit fourreau 7 par appui contre l'épaulement formé par la couronne circulaire résultant de la différence des diamètres extérieurs respectifs des portion 9 et 10 du fourreau 7 de façon à la maintenir en appui contre la face arrière 51 du stator 4.

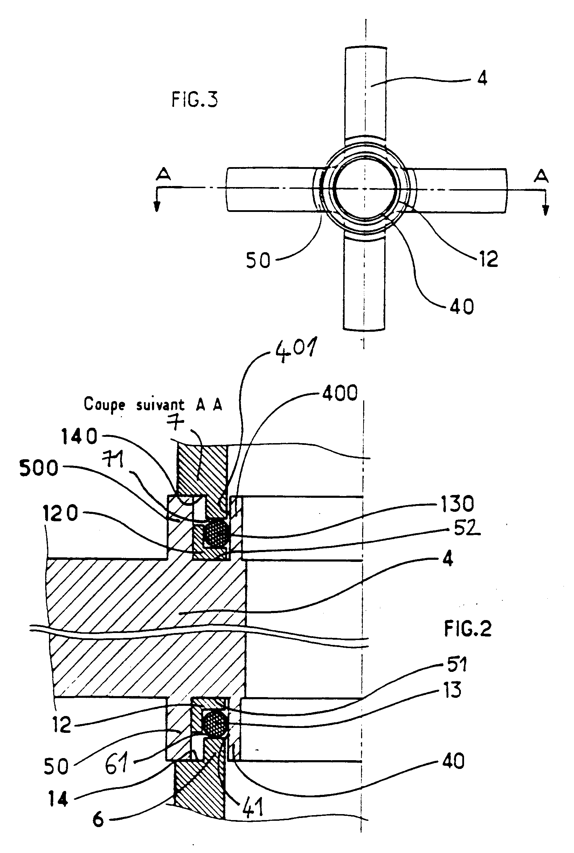

En référence à la figure 3, et de façon à rendre maximal le flux magnétique vers le rotor 11, l'épaisseur du stator dans les intervalles entre pôles, c'est-à-dire dans les plans bissecteurs des angles formés par les plans des quatre pôles statoriques, est réduite au minimum et ne permet pas de former une portée efficace pour un joint qui serait disposé en appui contre les extrémités planes du stator.

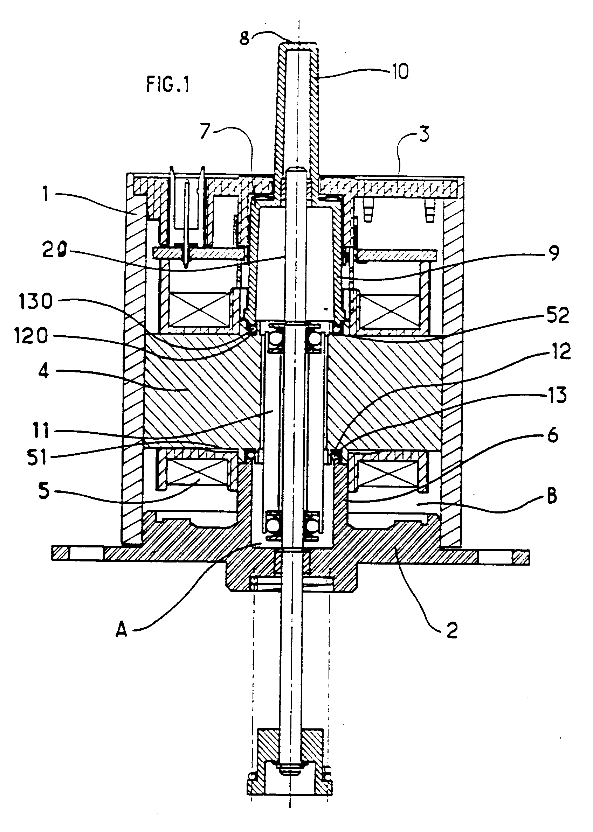

Pour pallier cet inconvénient, et comme le montre la figure 2 qui est une vue agrandie de deux détails de la partie gauche de la figure 1, deux bagues rigides 12 et 120 profilées en forme de L à deux branches de longueurs sensiblement égales et de diamètre sensiblement supérieur au diamètre de l'alésage du stator 4 sont placées de part et d'autre de celui-ci et suivant le même axe. La partie en forme de couronne plane annulaire des deux bagues 12, 120 prend appui respectivement sur les faces avant 51 et arrière 52 du stator 4. La partie en forme de cylindre des deux bagues 12, 120 forme avec ladite partie en forme de couronne plane un angle droit dont la bissectrice est dirigée vers l'axe du stator et respectivement vers les flasques avant 2 et arrière 3 du moteur. Chacune de ces deux bagues 12, 120 forme ainsi, avec une paroi 40, 400 constituant un prolongement cyclindrique de la surface de l'alésage du stator 4, une gorge circulaire permettant le logement d'un élément d'étanchéité 13, 130. Ici, chacun de ces deux éléments d'étanchéité est un joint torique réalisé en matériau élastique.

Ainsi la portée en forme de couronne circulaire de chacune des deux bagues 12 et 120 comprime chacun des joints 13 et 130 contre chacune des surfaces annulaires cylindriques extérieures 41 et 401 des parois 40 et 400 respectivement, solidaires des extrémités de l'alésage du stator 4.

De même, la partie en forme de couronne plane de chacune des deux bagues 12 et 120 comprime chacun des joints 13 et 130 respectivement contre l'extrémité en forme de couronne plane, ou tranche, 61 du fourreau 6 et contre l'extrémité en forme de couronne plane, ou tranche, 71 du fourreau 7, respectivement.

Ainsi le contact étanche entre chacun des joints 12 et 120 et le stator 4 se fait selon une surface cylindrique, tandis que le contact étanche entre chacun des joints 12 et 120 et les fourreaux 6 et 7 de logement du rotor 11 se fait selon une surface plane annulaire. Il en résulte que l'existence, dans les intervalles entre les pôles, de zones où le stator n'est pas plus épais que les parois 40 et 400 n'empêche pas une bonne étanchéité. En effet, dans ces zones où la partie en forme de couronne plane de chacune des bagues 12 et 120 n'est pas soutenue par la stator 4, la rigidité des bagues 12 et 120 fait que les joints 13 et 130, supportés par ces bagues 12 et 120, restent quand même comprimés contre les tranches 61 et 71 pour assurer une bonne étanchéité. De plus, du fait que l'étanchéité entre les joints 13 et 130 et le stator est assurée le long des surfaces annulaires cylindriques 41 et 401, le rétrécissement extrême de la largeur des faces 51 et 52 dans les zones entre les pôles est sans conséquence sur la qualité de l'étanchéité.

Un épaulement 14, 140 pratiqué dans les extrémités de chacun des fourreaux 6 et 7 peut coopérer par contact avec des butées 50, 500 du stator, en forme de créneaux s'étendant le long d'un arc de cercle, assurant un blocage mécanique en position du stator et une limitation de l'écrassement des éléments d'étanchéité 13, 130.

Un tel moteur comportant des éléments d'étanchéité permettant d'isoler l'un de l'autre le milieu rotorique A et milieu statorique B,et, du même coup, le milieu rotorique A et le milieu extérieur, est particulièrement bien adapté aux dispositifs de régulation de gaz dangereux ou nocifs ainsi que pour les dispositifs de régulation de liquides.

## Revendications

1. Moteur électrique pas à pas linéaire débrayable comprenant un stator multipolaire (4) dans l'alésage duquel roule de manière cycloidale un rotor (11) de diamètre inférieur, et comportant des moyens d'étanchéité (12,13,120,130) disposés entre le milieu rotorique (A) et le milieu statorique (B) pour isoler ledit milieu statorique (B), dudit milieu rotorique (A), caractérisé par le fait que lesdits moyens d'étanchéité comprennent des moyens élastiques (13,130) et des moyens rigides (12,120) pour supporter lesdits moyens élastiques (13,130) et les comprimer d'une part contre deux surfaces annulaires cylindriques (41,401) solidaires respectivement des deux extrémités de l'alésage dudit stator (4) et d'autre part contre les tranches (61,71) de deux fourreaux (6,7) cylindriques de logement dudit rotor (11).

2. Moteur selon la revendication 1, dans lequel lesdits moyens rigides comprennent des bagues d'appui (12,120) profilées en forme de L.

3. Moteur selon l'une des revendications 1 ou 2, dans lequel lesdits moyens élastiques comprennent des joints toriques (13,130).

## Claims

1. Disengageable linear stepper electric motor comprising a multipole stator (4) in the bore of which a rotor (11) of smaller diameter revolves cycloidally, and comprising sealing means (12,13,120,130) disposed between the rotor environment (A) and the stator environment (B) for isolating said stator environment (B) from said rotor environment (A) characterized in that said sealing means comprise resilient means (13,130) and rigid means (12,120) for supporting said resilient means (13,130) and compressing them, on the one hand, against two cylindrical annular surfaces (41,40) integral respectively with the two ends of the bore of said stator (4) and, on the other hand, against the edges (61,71) of two cylindrical sleeves (6,7) housing said rotor (11).

2. Motor as claimed in claim 1, wherein said rigid means comprise bearing rings (12,120) with an L shaped section.

3. Motor as claimed in one of claims 1 or 2, wherein said resilient means comprise O seals (13,130).

## Patentansprüche

1. Auskuppelbarer elektrischer linearer Schrittmotor, der einen mehrpoligen Stator (4) umfaßt, in dessen Bohrung in zykloider Weise ein Läufer (11) von geringerem Durchmesser rotiert, und der Dichtungsmittel (12, 13, 120, 130) aufweist, die zwischen der Läuferumgebung (A) und der Statorumgebung (B) angeordnet sind, um diese Statorumgebung (B) von dieser Läuferumgebung (A) zu trennen, dadurch gekennzeichnet, daß die Dichtungsmittel elastische Mittel (13, 130) umfassen sowie starre Mittel (12, 120), um die elastischen Mittel (13, 130) zu stützen und sie einerseits gegen zwei zylindrische ringförmige Flächen (41, 401), die jeweils mit den beiden Enden der Bohrung des Stators (4) einstückig sind, und andererseits gegen die Ränder (61, 71) der beiden zylindrischen Hülsen (6, 7) für die Lagerung des Läufers (11) zu drücken.

2. Motor nach Anspruch 1, bei dem die starren Mittel Stützringe (12, 120) mit L-Profil umfassen.

3. Motor nach einem der Ansprüche 1 oder 2, bei dem die elastischen Mittel Dichtungsringe (13, 130) umfassen.
